# EUROPÄISCHE PATENTSCHRIFT

(11) **EP 3 682 131 B1**
(45) Veröffentlichungstag und Bekanntmachung des Hinweises auf die Patenterteilung: **17.11.2021**
(21) Anmeldenummer: 17781005.8
(22) Anmeldetag: 12.09.2017
(51) Int. Cl.: F16D 23/08, F16D 41/14

(54) **FREILAUFKUPPLUNG**
OVERRUNNING CLUTCH
EMBRAYAGE À ROUE LIBRE

(43) Veröffentlichungstag der Anmeldung: 22.07.2020
(73) Patentinhaber: GKN AUTOMOTIVE LTD., Birmingham Business Park Birmingham West Midlands B37 7YE (GB)
(72) Erfinder: BEIGANG, Wolfgang, 53819 Neunkirchen-Seelscheid (DE); WECKERLING, Thomas, 53757 Sankt Augustin (DE)
(74) Vertreter: btb IP Bungartz Baltzer Partnerschaft mbB Patentanwälte
(86) Internationale Anmeldenummer: PCT/EP2017/072876
(87) Internationale Veröffentlichungsnummer: WO 2019/052635

(56) Entgegenhaltungen:
- EP-A1- 1 148 264
- DE-A1- 2 354 332

## Beschreibung

Die Erfindung betrifft eine selbstschaltende Freilaufkupplung, die für den Einsatz in einem Antriebsstrang eines Kraftfahrzeugs, insbesondere bei einem Personenkraftwagen (PKW), eingerichtet ist. Die Erfindung betrifft außerdem die Verwendung einer derartigen Freilaufkupplung bei einer bevorzugt elektromotorisch angetriebenen Achsantriebseinheit zum Antrieb der Räder einer Achse eines Kraftfahrzeugs, insbesondere eines PKW, sowie eine mit einer derartigen Freilaufkupplung ausgestattete Achsantriebseinheit.

Freilaufkupplungen, die ein freies Drehen von zwei Kupplungsgliedern relativ zueinander in einer Freilaufdrehrichtung ermöglichen und die in einer der Freilaufdrehrichtung entgegengesetzten Drehbeanspruchung (Lastdrehrichtung) eine drehfeste Verbindung zwischen den beiden Kupplungsgliedern herstellen, sind dem Fachmann bekannt. Freilaufkupplungen können als Überholkupplungen oder als Rücklaufsperren eingesetzt werden.

Üblich sind Freilaufkupplungen mit federbelasteten Sperrklinken, die verschwenkbar an einem der beiden Kupplungsglieder oder an einem zwischen den beiden Kupplungsgliedern angeordneten Zwischenglied angeordnet sind und in Abhängigkeit der Richtung einer Relativdrehung der Kupplungsglieder zueinander ein freies Drehen oder eine drehfeste Verbindung zwischen den Kupplungsgliedern gewährleisten. Die typischerweise dauerhaft federbelasteten Sperrklinken kommen zur Herstellung einer drehfesten Verbindung in der der Freilaufrichtung entgegengesetzten Drehbeanspruchung oder Lastdrehrichtung mit Mitnahmeanschlägen formschlüssig in Anlage. Bei Beanspruchung der Freilaufkupplung in Freilaufdrehrichtung überstreichen die Sperrklinken die Mitnahmeanschläge hingegen, ohne eine Drehung der Kupplungsglieder relativ zueinander zu blockieren.

Nachteilig an derartigen Freilaufkupplungen ist, dass das über die Kupplung in Lastdrehrichtung zu übertragende Drehmoment über die Sperrklinken und die Mitnahmeanschläge zu übertragen ist. Die Sperrklinken haben als relativ filigran auszugestaltende Bauteile, die schwenkbar und federbelastet innerhalb der Kupplung über noch filigranere Bauteile zu lagern sind, nur ein geringes Drehmomentübertragungspotential. Dies gilt umso mehr dann, wenn die Wirkdurchmesser, auf denen die Sperrklinke auf die Kupplungsglieder wirkt, gering sind und ein zu übertragendes Moment über einen geringen Hebelarm abgestützt werden muss und wegen des geringen Durchmessers weniger bzw. nur relativ kleine Sperrklinken über den Umfang verteilt werden können. Außerdem verursacht das Überstreichen der Mitnahmeanschläge durch die dauerhaft hiergegen angestellten Sperrklinken ein für viele Freilaufkupplungen typisches Geräusch, das bei zunehmend größer und stabiler ausgelegten Kupplungen zunehmend lauter wird und inakzeptabel störend sein kann.

Vor diesem Hintergrund sind Freilaufkupplungen entwickelt worden, bei denen ein zwischen den beiden Kupplungsgliedern der Freilaufkupplung wirkendes Zwischenglied eingesetzt wird, das in axialer Richtung zwischen einer Freilaufposition und einer Eingriffsposition, in der das Zwischenglied über eine hoch belastbare Lastverzahnung mit beiden Kupplungsgliedern in Eingriff steht, verschieblich ist.

Aus der Druckschrift DE 763 479 ist eine Freilaufkupplung bekannt, bei der ein zwischen einem ersten Kupplungsglied und einem zweiten Kupplungsglied angeordnetes Kupplungsklauenglied axial aus einer Freilaufstellung in eine Eingriffsstellung verschoben wird, um die beiden Kupplungsglieder in wenigstens einer Drehbeanspruchungsrichtung über eine in axiale Richtung weisende Verzahnung formschlüssig miteinander zu verkoppeln. Ferner ist ein Verriegelungsmechanismus vorgesehen, bei dem über die Axialverschiebung eines Gleitrings die Freilaufkupplung insgesamt gesperrt werden kann, so dass sie Drehmoment in beiden Richtungen zu übertragen vermag. Eine Freilaufkupplung mit ähnlicher Funktionalität ist in der Druckschrift DE 2 354 332 offenbart, wobei hier radial nach innen bzw. außen weisende Verzahnungen vorgesehen sind.

Die Druckschrift EP1 148 264 offenbart eine Freilaufkupplung für ein Fahrrad.

Derartige Freilaufkupplungen sind komplex aufgebaut und aufwändig zu fertigen. Sie bauen insbesondere in axialer Richtung groß und sehen Steuerklinken vor, die bei in Freilaufposition befindlicher Kupplung dauerhaft federbelastet gegen Steueranschläge angestellt sind oder diese anschlagend überstreichen, so dass bei Verwendung einer derartigen Freilaufkupplung mit stark wahrnehmbarer Geräuschentwicklung zu rechnen ist. Durch den komplexen Aufbau des Zwischenglieds sind die zu bewegenden Massen groß und die bei einem Schaltvorgang auftretenden Schaltimpulse hoch.

Für Anwendungen im Kraftfahrzeugbau, insbesondere für Anwendungen in einem Teil eines Antriebsstrangs, die bedingt durch das Vorsehen von Untersetzungsstufen ein hohes Drehmomentübertragungspotential erfordern und bei denen außerdem eine besonders kompakte, platzsparend in die umgebende Antriebsstrangarchitektur zu integrierende, leicht zu fertigende und wenig störanfällige Freilaufkupplung wünschenswert ist, die schnell und mit geringen zu bewegenden Massen und kleinen mechanischen Schaltimpulsen schaltet und einen geräuschlosen Freilauf zur Verfügung stellen soll, sind derartige Freilaufkupplungen daher nicht geeignet und stellen für einen Fachmann der automobilen Antriebstechnik keine sinnvolle Anwendung dar.

Es ist daher Aufgabe der Erfindung, eine für den Einsatz in einem Antriebsstrang eines Kraftfahrzeugs, insbesondere in einer bevorzugt elektromotorisch angetriebenen Achsantriebseinheit, besonders geeignete, leicht zu integrierende und wenig störanfällige Freilaufkupplung zur Verfügung zu stellen, die ein hohes Drehmoment zu übertragen vermag, kompakt aufbaut, leicht zu fertigen ist und auch in Freilaufdrehrichtung weitgehend geräuschlos arbeitet. Die für einen Schaltvorgang zu bewegenden Massen sollen klein gehalten werden, so dass bei einem Schaltvorgang nur geringe Schaltimpulse auftreten und dieser zügig vollzogen werden kann. Es ist ferner Aufgabe der Erfindung, eine Achsantriebseinheit mit einer derartigen Freilaufkupplung zur Verfügung zu stellen.

Die erfindungsgemäße Freilaufkupplung wird gebildet durch eine Freilaufkupplung mit einem ersten Kupplungsglied, einem zweiten Kupplungsglied und einem mit erstem Kupplungsglied und zweitem Kupplungsglied zusammenwirkenden Zwischenglied, das abhängig von der Richtung der Drehbeanspruchung der Freilaufkupplung eine Freilaufstellung, in der ein freies Drehen eines Kupplungsgliedes gegenüber dem anderen in einer Freilaufdrehrichtung ermöglicht ist, oder eine Eingriffsstellung, in der über das Zwischenglied eine drehfeste Verbindung zwischen beiden Kupplungsgliedern bei einer der Freilaufdrehrichtung entgegengesetzten Drehbeanspruchung bzw. in einer Lastdrehrichtung hergestellt ist, einnimmt, wobei das Zwischenglied axial verschieblich angeordnet ist und ein Wechsel zwischen der Freilaufstellung und der Eingriffsstellung durch eine axiale Verschiebung des Zwischenglieds erfolgt, und wobei wenigstens ein Steuermechanismus vorgesehen ist, der die axiale Verschiebung des Zwischenglieds aus der Freilaufstellung in die Eingriffsstellung über ein Steuerelement, insbesondere mittels einer Steuerklinke, initiiert.

In einer ersten vorteilhaften Ausführungsform der Erfindung ist vorgesehen, dass das erste Kupplungsglied das zweite Kupplungsglied in der Eingriffsstellung unter Bildung einer wirksamen Verzahnungsbreite axial übergreift und das Steuerelement, insbesondere die Steuerklinke, zumindest teilweise, insbesondere aber vollständig innerhalb der Verzahnungsbreite am Zwischenglied angeordnet ist.

Zusätzlich oder alternativ zu der vorstehend genannten vorteilhaften Ausführungsform kann vorgesehen sein, dass das Steuerelement am Zwischenglied angeordnet ist und in der Freilaufstellung mit einer am ersten Kupplungsglied oder am zweiten Kupplungsglied vorgesehenen Lastverzahnung in Anlage kommt, um die axiale Verschiebung des Zwischenglieds in die Eingriffsstellung zu initiieren, wenn die Drehbeanspruchung von der Freilaufdrehrichtung in die Lastdrehrichtung wechselt.

Beide vorstehend beschriebenen Ausgestaltungen können sowohl gemeinsam als auch als Alternativen dazu beitragen, eine Freilaufkupplung in der gewünschten vorteilhaften Weise zu realisieren. Besonders bevorzugt ist es allerdings, wenn beide Ausgestaltungen gemeinsam zum Einsatz kommen.

Die Verzahnungsbreite B ist die Breite des für die Drehmomentübertragung in Eingriffsstellung insgesamt wirksamen Verzahnungsübergriffs und ist durch den axialen Abstand definiert, den die für die Drehmomentübertragung wirksamen Lastverzahnungspaarungen zwischen Zwischenglied und ersten Kupplungsglied sowie zwischen Zwischenglied und zweitem Kupplungsglied in der Eingriffsstellung insgesamt überbrücken. Die Verzahnungsbreite wird so durch den Abstand B von zwei äußeren, auf der Rotationsachse senkrecht stehenden Lastverzahnungsebenen definiert, in denen in der Eingriffsstellung jeweils eine Lastverzahnungspaarung gerade noch wirksam in Eingriff steht. Dabei können beide Lastverzahnungsebenen jeweils von derselben Lastverzahnungspaarung oder eine erste Lastverzahnungsebene von einer ersten Lastverzahnungspaarung und eine zweite Lastverzahnungsebene von einer zweiten Lastverzahnungspaarung definiert werden.

Eine Lastverzahnungspaarung ist dabei die zwischen erstem Kupplungsglied und Zwischenglied sowie die zwischen zweitem Kupplungsglied und Zwischenglied wirksame Verzahnungspaarung, über die bei Beanspruchung der Kupplung entgegen der Freilaufrichtung (Lastdrehrichtung) unter Zwischenschaltung des Zwischengliedes Drehmoment vom ersten Kupplungsglied auf das zweite Kupplungsglied oder umgekehrt übertragen wird.

Bei einer derartig ausgestalteten Freilaufkupplung kann bevorzugt vorgesehen sein, dass das Zwischenglied und weiter bevorzugt auch der Steuermechanismus zumindest teilweise, vorteilhaft aber vollständig innerhalb der erzeugten Verzahnungsbreite angeordnet ist. Bevorzugt sind Zwischenglied und auch der Steuermechanismus zumindest in der Eingriffsstellung vollständig innerhalb der Verzahnungsbreite angeordnet.

Durch die vorstehend beschriebene Anordnung des Steuerelements wird eine kompakte Bauform ermöglicht, die außerdem bei entsprechender Ausgestaltung des den Formschluss zwischen den Kupplungsgliedern und dem Zwischenglied gewährleistenden Eingriffs ein sehr hohes Drehmomentübertragungspotential aufweist.

Das Zwischenglied kann ringförmig ausgebildet sein und eine wenigstens teilweise mit einer äußeren Lastverzahnung versehene Außenringfläche und eine wenigstens teilweise mit einer inneren Lastverzahnung versehene Innenringfläche aufweisen, wobei die äußere Lastverzahnung und die innere Lastverzahnung sich in radialer Richtung gesehen zumindest teilweise überdecken. Insbesondere kann die äußere Lastverzahnung die innere Lastverzahnung zumindest teilweise, bevorzugt vollständig, überdecken. Bevorzugt ist die Außenringfläche über die volle axiale Breite des Zwischenglieds mit einer umlaufenden äußeren Lastverzahnung versehen, während die Innenringfläche nur in einem axialen Teilabschnitt mit einer umlaufenden inneren Lastverzahnung versehen ist.

Die am Zwischenglied vorgesehenen Lastverzahnungen wirken mit hierzu korrespondierenden Lastverzahnungen an den Kupplungsgliedern in Eingriffsstellung lastübertragend zusammen. Mit Lastverzahnung ist die an einem Kupplungsglied oder an dem Zwischenglied vorgesehene Verzahnung gemeint, über die, wenn sich das Zwischenglied in der Eingriffsstellung befindet, ein lastübertragender Formschluss zwischen den einzelnen Bauteilen hergestellt ist. Die Ausbildung des Zwischengliedes als Zwischenring mit an den inneren und äußeren Ringflächen radial innenseitig und radial außenseitig vorgesehenen Lastverzahnungen ermöglicht das gewünschte hohe Drehmomentübertragungspotential der Freilaufkupplung.

Um die Axialverschiebung zu ermöglichen, kann vorgesehen sein, dass das Zwischenglied an der radial nach innen weisenden Ringfläche oder an der radial nach außen weisenden Ringfläche eine Schraubverzahnung aufweist, wobei die Schraubverzahnung am Zwischenglied mit einer korrespondierenden Schraubverzahnung an einem der Kupplungsglieder bei Drehbeanspruchung entgegen der Freilaufrichtung lastübertragend in Eingriff steht. Durch die Schraubverzahnung wird eine Axialkraft auf das Zwischenglied ausgeübt, durch die dieses - je nach Belastungsrichtung - aus der Eingriffsstellung in die Freilaufstellung oder aus der Freilaufstellung in die Eingriffsstellung gedrängt wird. Die Schraubverzahnung hat somit nicht nur eine lastübertragende Funktion als Lastverzahnung, sondern auch eine Steuerfunktion und bildet somit gleichzeitig auch eine Steuerverzahnung. Bevorzugt steht das Zwischenglied dann, wenn die Freilaufkupplung entgegen der Freilaufdrehrichtung drehbeansprucht ist und sich das Zwischenglied in Eingriffsstellung befindet, über die gesamte axiale Länge der am Zwischenglied vorgesehenen Schraubverzahnung mit der an einem der Kupplungsglieder vorgesehenen Schraubverzahnung lastübertragend in Eingriff. Die Schraubverzahnung kann sich über die gesamte axiale Länge des Zwischenelements erstrecken oder nur abschnittsweise in einem axialen Teilbereich vorgesehen sein. Bevorzugt ist vorgesehen, dass die an der Außenringfläche des Zwischenglieds vorgesehene Lastverzahnung von einer Schraubverzahnung gebildet ist.

Das Zwischenglied kann sich je nach konstruktiver Ausgestaltung der Kupplung sowohl in der Eingriffsstellung als auch in der Freilaufstellung vollständig innenseitig des Übergriffs befinden, mit dem das erste Kupplungsglied das zweite Kupplungsglied unter Bildung eines axialen Überlappungsbereichs bzw. Ringraums zwischen erstem und zweiten Kupplungsglied in der Eingriffsstellung übergreift. Das Zwischenglied kann sich aber auch nur in der Freilaufstellung oder nur in der Eingriffsstellung vollständig in dem Überlappungsbereich bzw. dem Ringraum befinden, während es in der jeweils anderen Stellung infolge der den Stellungswechsel herbeiführenden Axialverschiebung zumindest teilweise aus dem Raum radial innenseitig des Übergriffs bzw. dem durch den Übergriff erzeugten Ringraum zwischen erstem und zweiten Kupplungsglied heraussteht.

Der Steuermechanismus umfasst in einer vorteilhaften Ausgestaltung ein am Zwischenglied frei schwenkbar gelagertes oder frei schwenkbar abgestütztes Steuerelement, bevorzugt in Form einer Steuerklinke. Mit "frei schwenkbar" ist eine Lagerung oder eine Abstützung gemeint, bei der die Steuerklinke nicht durch ein Anstellmittel wie eine Feder in eine bestimmte Schwenkrichtung gegen Steueranschläge vorgespannt ist. Durch die Anordnung der Steuerklinke am Zwischenglied können außerdem das erste Kupplungsglied und das zweite Kupplungsglied konstruktiv einfacher ausgestaltet werden und die Integration der Steuerklinke in das Zwischenglied trägt insgesamt zur Kompaktheit der Freilaufkupplung bei. Das Steuerelement bzw. die Steuerklinke ist überdies ausschließlich dafür ausgebildet, die Axialverschiebung des Zwischenglieds zu initiieren. Eine lastübertragende Funktion übt die Steuerklinke auch in der Eingriffsstellung, in der die Steuerklinke bevorzugt vollständig lastfrei gehalten ist, nicht oder zumindest nicht in nennenswertem Umfang aus.

Dadurch, dass die wenigstens eine Steuerklinke an dem Zwischenglied angeordnet ist, lässt sich eine besonders kompakte und trotzdem mit hohem Drehmoment belastbare Ausgestaltung der Freilaufkupplung realisieren. Insbesondere kann die Steuerklinke derart verschwenkbar an dem Zwischenglied gelagert sein, dass sich die Steuerklinke vollständig und bevorzugt sowohl in der Eingriffsstellung als auch in der Freilaufstellung axial innerhalb der die Verzahnungsbreite definierenden äußeren Verzahnungsebenen befindet. Es sind aber durchaus auch Ausführungsformen denkbar, in denen die Steuerklinke sich in der Freilaufstellung und/oder in der Eingriffsstellung nur teilweise innerhalb der die Verzahnungsbreite definierenden Ebenen befindet.

Der Steuermechanismus ist derart eingerichtet, dass er die axiale Verschiebung des Zwischenglieds aus der Freilaufstellung in die Eingriffsstellung nur in definierten, den Übergang des Zwischenglieds in die Eingriffsstellung gewährleistenden Drehwinkelstellungen ermöglicht. Die einen Teil des Steuermechanismus bildende Steuerklinke ist somit außerdem eine Synchronisationsklinke, durch die der Übergang des Zwischenglieds aus der Freilaufstellung in die Eingriffsstellung nur dann erfolgen kann, wenn die Ausrichtungen der den Formschluss zwischen Zwischenglied und Kupplungsglied in der Eingriffsstellung herstellenden Lastverzahnungen sich in einer den Übergang des Zwischenglieds aus der Freilaufstellung in die Eingriffsstellung ermöglichenden Drehwinkelstellung zueinander befinden.

Um die Steuer- und Synchronisationsklinke bzw. das Steuerelement zu betätigen, kann der Steuermechanismus ein Steuerteil umfassen, das abhängig von der Drehrichtung einer Relativdrehung zwischen den Kupplungsgliedern die Steuerklinke aus einer Öffnungsstellung in eine Einrückstellung oder aus einer Einrückstellung in eine Öffnungsstellung drängt. Die Einrückstellung ist die Stellung, in der die Steuerklinke mit einem Steueranschlag in Anlage kommt, infolge dessen das Zwischenglied unter Zusammenwirken mit einem der Kupplungsglieder in die Eingriffsstellung gedrängt wird. Die Öffnungsstellung ist eine Stellung, in der die Steuerklinke sich insbesondere dann befindet, wenn die Kupplung in der Freilaufdrehrichtung beansprucht ist.

Als besonders vorteilhaft hat es sich erwiesen, wenn das Steuerteil derart mit einem Kupplungsglied zusammenwirkt, dass es das bevorzugt als Steuerklinke ausgebildete Steuerelement bei in Freilaufdrehrichtung beanspruchter Freilaufkupplung kontinuierlich in die Öffnungsstellung drängt und dort dauerhaft zu halten vermag. Eine derartige Ausgestaltung hat insbesondere den Vorteil, dass ein Anschlagen der Steuerklinke gegen einen die Steueranschläge bereitstellenden Bereich eines Kupplungsgliedes nicht stattfindet und die Kupplung sich daher auch bei Beanspruchung in Freilaufrichtung geräuscharm verhält.

Um das angestrebte geräuscharme Verhalten zu ermöglichen, ist vorgesehen, dass das Steuerteil in Reibkontakt mit einem Kupplungsglied steht und bei einer Relativdrehung der Kupplungsglieder zueinander reibkraftbeaufschlagt mittelbar oder unmittelbar gegen die Steuerklinke angestellt ist. Dies kann dadurch gewährleistet sein, dass die Steuerklinke in das Steuerteil eingreift und so die Steuerklinke unmittelbar mit dem Steuerteil zusammenwirkt. Bevorzugt ist aber eine Ausgestaltung, in der ein mit der Steuerklinke zusammenwirkender Steuerausleger in das Steuerteil eingreift. Hierbei wirkt das Steuerteil nur mittelbar mit der Steuerklinke zusammen, indem das Steuerteil eine Stellkraft auf den Steuerausleger ausübt, der diese als Stellmoment, mittels dem die Steuerklinke aus der Einrückstellung in die Öffnungsstellung oder aus der Öffnungsstellung in die Einrückstellung gedrängt wird, auf die Steuerklinke überträgt.

Der Steuerausleger und die Steuerklinke können in vorteilhafter Weise axial zueinander versetzt sein, so dass Steuerteil, Steuerklinke, Steuerausleger und Steueranschläge in konstruktiv einfach zu realisierender Weise unter axialem Versatz zueinander innerhalb der Verzahnungsbreite angeordnet sein und miteinander zusammenwirken können.

Als besonders vorteilhaft wird eine Ausgestaltung angesehen, bei der das Steuerteil als ein mit einem Kupplungsglied in Reibkontakt stehender ein- oder mehrteiliger Reibring ausgebildet ist. Ein derartiger Reibring wirkt mit der Steuerklinke mittelbar oder unmittelbar in der vorstehend beschriebenen Art und Weise zusammen und kann insbesondere einen Vorsprung oder mehrere Vorsprünge ausbilden, mit dem das Steuerelement, insbesondere also der Steuerausleger oder die Steuerklinke, unter Ausübung einer Stellkraft in Anlage kommt. Der Reibring kann dabei mit einer Radialreibfläche (einer radial nach außen oder radial nach innen weisenden Reibfläche) und/oder innerhalb einer Ringnut mit Seitenflächen, durch die die Ringnut axial begrenzt wird, in Reibkontakt stehen.

Zur Aufnahme der Steuerklinke können Steuerelementaufnahmen, insbesondere Steuerklinkenaufnahmen, in Form radialer taschenartiger Vertiefungen oder Durchbrüche in das Zwischenglied eingebracht sein. Um das Zwischenglied auch in dem Bereich derartiger Steuerelementaufnahmen trotz der hierfür erforderlichen Materialausnehmungen hinreichend belastbar zu halten, kann vorgesehen sein, dass im Bereich dieser Steuerelementaufnahmen auf die radial innenseitige und/oder die radial außenseitige Lastverzahnung am Zwischenglied durch Bildung einer Verzahnungsunterbrechung verzichtet ist, also keine "Zahnlücken" der Lastverzahnung im Bereich der Steuerklinkenaufnahme vorgesehen sind. Die mit dieser am Zwischenglied zusammenwirkende Lastverzahnung an einem der Kupplungsglieder ist der Ausgestaltung der am Zwischenring ausgestalteten Lastverzahnung entsprechend ausgebildet. Bevorzugt sind am Zwischenglied eine Mehrzahl von Steuerelementaufnahmen angeordnet, die sich vorteilhaft gleichmäßig über den Umfang des Zwischenglieds verteilen können. Bevorzugt ist eine Ausgestaltung, bei der zwei Steuerelementaufnahmen diametral gegenüberliegend am Zwischenglied, bevorzugt jeweils im Bereich einer Verzahnungsunterbrechung, ausgebildet sind.

Um den Wechsel des Zwischenglieds aus der Freilaufstellung in die Eingriffsstellung zu initiieren kann vorgesehen sein, dass die Steuerklinke in einer Einrückstellung mit an einem Kupplungsglied vorgesehenen Steueranschlägen in Anlage gerät. Besonders vorteilhaft ist dabei die eingangs beschriebene Ausgestaltung, bei der die Steueranschläge von Teilen einer an einem Kupplungsglied vorgesehenen Lastverzahnung gebildet ist.

In einer besonders bevorzugten Ausgestaltung kann die Freilaufkupplung auch als sperrbare Freilaufkupplung ausgebildet sein, bei der ein Sperrglied vorgesehen ist, das die axiale Verschiebung des Zwischengliedes aus der Eingriffsstellung in die Freilaufstellung blockiert, wenn sich das Sperrglied in einer Blockierstellung befindet, und die axiale Verschiebung des Zwischengliedes aus der Eingriffsstellung in die Freilaufstellung freigibt, wenn sich das Sperrglied in einer Freigabestellung befindet.

Eine konstruktiv einfach zu realisierende Ausgestaltung und Integration eines Sperrglieds sieht vor, dass das Sperrglied eine der an einem der Kupplungsglieder vorgesehenen Schraubverzahnung entsprechende Sperrverzahnung oder eine der Lastverzahnung eines Kupplungsglieds entsprechende Sperrverzahnung aufweist, die mit der an dem jeweiligen Kupplungsglied vorgesehenen Schraubverzahnung oder Lastverzahnung, der die Sperrverzahnung entspricht, bei in Freigabestellung befindlichem Sperrglied in Überdeckung steht, so dass das Zwischenglied zur Einnahme der Freilaufstellung axial in das Sperrglied einfahren kann. Bei in Blockierstellung befindlichem Sperrglied ist die Sperrverzahnung hingegen gegenüber der Schraubverzahnung oder Lastverzahnung verdreht, so dass das Zwischenglied die Eingriffsstellung nicht verlassen kann, da es gegen die Sperrverzahnung gedrängt und somit durch diese blockiert wird. Die einzelnen Zähne der Sperrverzahnung bilden hierbei einzelne Sperrelemente.

Das Sperrglied ist bevorzugt ein außenverzahnter oder innenverzahnter Sperrring, der für den Wechsel zwischen Blockierstellung und Freigabestellung verdreht wird.

Das Sperrglied kann außerdem als extern schaltbares Sperrglied ausgebildet sein, das durch eine externe Aktuierung aus der Blockierstellung in die Freigabestellung und/oder aus der Freigabebestellung in die Blockierstellung überführt werden kann. Eine der beiden Stellungen des Sperrglieds bzw. der das Sperrglied betätigenden Aktuatorik kann als Grundstellung ausgeführt sein, die das Sperrglied bzw. die Aktuatorik selbsttätig einnimmt, wenn es durch die Aktuatorik nicht kraftbeaufschlagt ist ("normally blocked" oder "normally free"). Zum selbsttätigen Zurückstellen in die Grundstellung kann ein Rückstellmittel, etwa eine Rückstellfeder, eine Rückstellkraft bereitstellen.

Alternativ zu einer derartigen monostabilen Ausführung kann auch eine bistabile Ausführung gewählt werden, bei der das Sperrglied die einmal eingenommene Schaltstellung (Blockierstellung oder Freigabestellung) eigenständig dauerhaft beibehält, nachdem es in diese Stellung überführt worden ist.

Für die Aktuierung des Sperrglieds kommen verschiedene grundsätzlich bekannte Wirkprinzipien in Betracht wie etwa eine hydraulische, pneumatische oder elektromagnetische Aktuierung. Auch können Rampen- oder Nockenmechanismen eingesetzt werden.

Das Sperrglied kann aber auch als ein selbstschaltendes Sperrglied ausgebildet sein, bei dem wenigstens ein Sperrelement oder eine Mehrzahl von Sperrelementen dadurch aus einer Blockierstellung in eine Freigabestellung oder aus einer Freigabestellung in eine Blockierstellung gedrängt werden, dass innerhalb der Kupplung betriebszustandsabhängig auftretende und auf das Sperrglied bzw. auf die Sperrgliedaktuierung wirkende Kräfte als Stellkräfte zur Verstellung des Sperrglieds und der Sperrelemente genutzt werden. So können beispielsweise als Stellkräfte Fliehkräfte dazu genutzt werden, das Sperrglied infolge des Überschreitens einer bestimmten Grenzdrehzahl aus einer Blockierstellung in eine Freigabestellung oder aus einer Freigabestellung in eine Blockierstellung zu drängen.

Eine vorteilhafte Anwendung einer erfindungsgemäßen Freilaufkupplung stellt insbesondere deren Einsatz bei einer Achsantriebseinheit für einen Antriebsstrang eines Kraftfahrzeugs dar. Hierbei kann die Freilaufkupplung zur Blockierung einer Sonne, eines Planetensatzes oder eines Hohlrades und damit zur Realisierung einer Übersetzungsstufe eingesetzt werden. Eine derartige Verwendung kommt insbesondere bei einer elektromotorischen Achsantriebseinheit in Betracht, bei der ein über ein insbesondere mehrstufig ausgebildetes 2-Gang-Planetengetriebe verschiedene Übersetzungsstufen zwischen einem elektromotorischen Antriebsmotor und den Antriebsrädern einer Achse sowie gegebenenfalls der Rekuperationsbetrieb und/oder ein Rückwärtsgang realisiert werden. In Hinsicht auf die zumindest auch und bevorzugt rein elektromotorisch betriebene Achsantriebseinheit mit einer Freilaufkupplung sowie die Verwendung der Freilaufkupplung bei einer derartigen Achsantriebseinheit wird Bezug genommen auf die internationale Patentanmeldung PCT/EP2016/079169, in der die Verwendung einer Freilaufkupplung bei einer Achsantriebseinheit und die Achsantriebseinheit selbst beschrieben ist und deren Inhalt, insbesondere sofern dieser die Funktion und Verwendung der Freilaufkupplung und die Anordnung einer Freilaufkupplung an einer Achsantriebseinheit betrifft, hiermit in diese Anmeldung aufgenommen wird.

In den Zeichnungen zeigt
- Figur 1: eine als Rücklaufsperre eingesetzte sperrbare Freilaufkupplung in einer Außenansicht mit einem als Kupplungsglied fungierenden Kupplungsgehäuse,
- Figur 2: die Freilaufkupplung gemäß den vorherigen Figuren unter Weglassung des Kupplungsgehäuses mit einem in Eingriffsstellung befindlichen Zwischenglied und einem in Blockierstellung befindlichen Sperrglied,
- Figur 3a: die Freilaufkupplung gemäß den vorherigen Figuren in einer Schnittansicht in der auch in Figur 2 gezeigten Eingriffsstellung,
- Figur 3b: die Freilaufkupplung aus gemäß den vorherigen Figuren in einer Schnittansicht mit einem in Freilaufstellung befindlichen Zwischenglied und einem in Freigabestellung befindlichen Sperrglied,
- Figur 4a: die Freilaufkupplung gemäß den vorherigen Figuren in einer Draufsicht in der auch in Figur 2 und Figur 3a gezeigten Eingriffsstellung,
- Figur 4b: die Freilaufkupplung gemäß den vorherigen Figuren in einer Draufsicht in der auch in Figur 3b gezeigten Freilaufstellung unter Weglassung eines vorderen Teils des Zwischengliedes,
- Figur 4c: die Freilaufkupplung gemäß den vorherigen Figuren in einer Draufsicht in der auch in Figur 2 und Figur 3a gezeigten Eingriffsstellung unter Weglassung des Sperrglieds und eines vorderen Teils eines inneren Kupplungsglieds,
- Figur 5a: die Freilaufkupplung gemäß einer der vorherigen Figuren in einer perspektivischen Ansicht in der auch in Figur 2 und Figur 3a gezeigten Eingriffsstellung von hinten unter Weglassung des Kupplungsgehäuses, des Sperrglieds und des Zwischenglieds,
- Figur 5b: die Freilaufkupplung gemäß einer der vorherigen Figuren in einer perspektivischen Ansicht in der auch in Figur 3b gezeigten Freilaufstellung von hinten unter Weglassung des Kupplungsgehäuses, des Sperrglieds und des Zwischenglieds,
- Figur 5c: die Freilaufkupplung gemäß einer der vorherigen Figuren in einer perspektivischen Ansicht in einer Zuschaltposition,
- Figur 6a: ein bei den Freilaufkupplungen gemäß einer der vorherigen Figuren eingesetztes Steuerteil in Form eines Reibrings,
- Figur 6b: das Steuerteil aus Figur 6a in einer Explosionsdarstellung,
- Figur 7a: eine alternative Ausgestaltung eines als Reibring ausgebildeten Steuerteils in einer perspektivischen Ansicht, und
- Figur 7b: den in Figur 7a gezeigten Reibring in einer Seitenansicht.

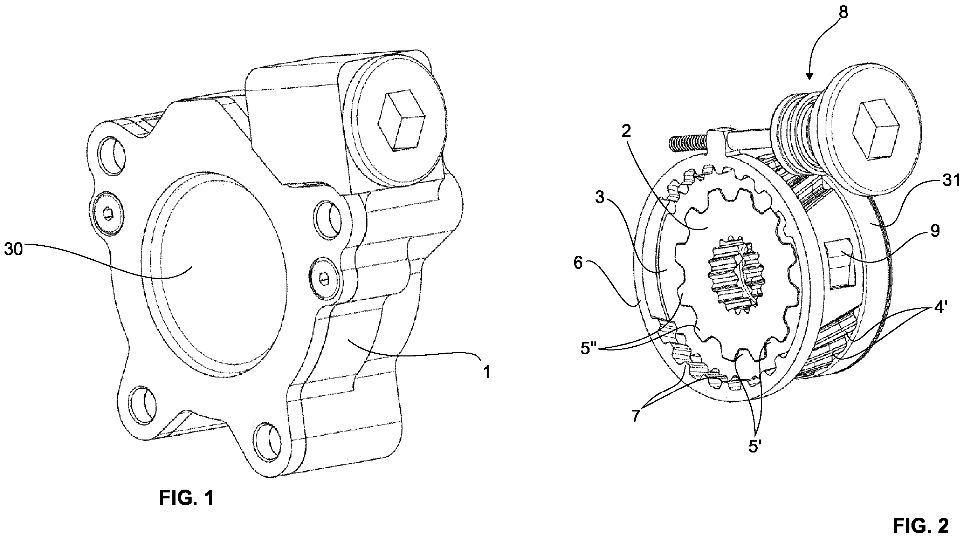

Figur 1 zeigt zu Veranschaulichungszwecken eingesetzte sperrbare Freilaufkupplung in einer Außenansicht. Die Freilaufkupplung kann über das Gehäuse zum Beispiel fest an einer Achsantriebseinheit eines Kraftfahrzeugs angeordnet werden und als Rücklaufsperre eingesetzt werden, über die eine Sonne, ein Planetensatz oder ein Hohlrad eines 2-Gang Planetengetriebes in einer Drehrichtung blockiert und ein einer anderen Drehrichtung freigegeben werden kann. Dabei fungiert das Gehäuse als ein erstes Kupplungsglied 1, das - je nachdem, ob sich die Freilaufkupplung in einer von einem Sperrglied freigegebenen Freilaufstellung oder in einer Eingriffsstellung befindet - die Drehung eines zweiten Kupplungsgliedes in einer Freilaufrichtung zulässt oder bei Vorliegen einer der Freilaufrichtung entgegengesetzten Drehbeanspruchung (Lastdrehrichtung) verhindert.

Das erste Kupplungsglied 1 ist in dem in den Figuren gezeigten Ausführungsbeispiel ein äußeres, stehendes Kupplungsglied, mittels dem ein Rückdrehen eines zweiten Kupplungsglieds 2 in eine einer Freilaufrichtung entgegengesetzten Drehrichtung verhindert werden kann. Das erste Kupplungsglied kann aber bei anderer Ausgestaltung der Freilaufkupplung bei gleichzeitiger Beibehaltung der nachfolgend beschriebenen Funktionen der Freilaufkupplung auch ein drehbar gelagertes Kupplungsglied und/oder ein inneres Kupplungsglied sein. Ein Einsatz einer gemäß den Ausführungsbeispielen ausgebildeten Kupplung als Überholkupplung ist also ebenfalls denkbar.

Figur 2 gewährt durch zeichnerische Weglassung des Kupplungsgehäuses und damit auch unter Weglassung des äußeren, ersten Kupplungsgliedes sowie durch weitgehende zeichnerische Weglassung eines das Kupplungsgehäuse nach außen verschließenden Verschlussdeckels 30 einen Blick auf das Innenleben der in Figur 1 gezeigten Freilaufkupplung.

Die in Figur 2 dargestellte Stellung der Freilaufkupplung ist eine Eingriffsstellung. Zwischen dem äußeren, ersten Kupplungsglied 1 (entspricht Kupplungsgehäuse in Figur 1, in Figur 2 weggelassen) und einem inneren, zweiten Kupplungsglied 2 ist ein axial verschiebbares Zwischenglied 3 angeordnet. Das Zwischenglied 3 ist als außen- und innenverzahnter Ring ausgebildet und in einem Ringraum zwischen dem äußeren, ersten Kupplungsglied und dem inneren, zweiten Kupplungsglied 2 aufgenommen, der dadurch entsteht, dass das erste Kupplungsglied das zweite Kupplungsglied in axialer Richtung übergreift. In dem in den Figuren gezeigten Ausführungsbeispiel ist das erste Kupplungsglied das äußere Kupplungsglied, welches das innere, zweite Kupplungsglied 2 axial übergreift.

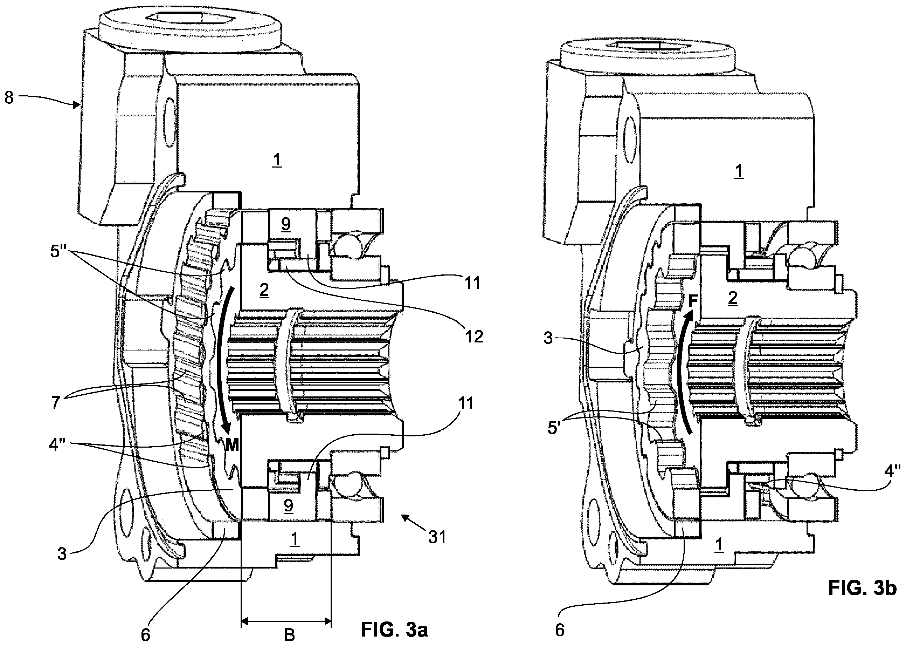

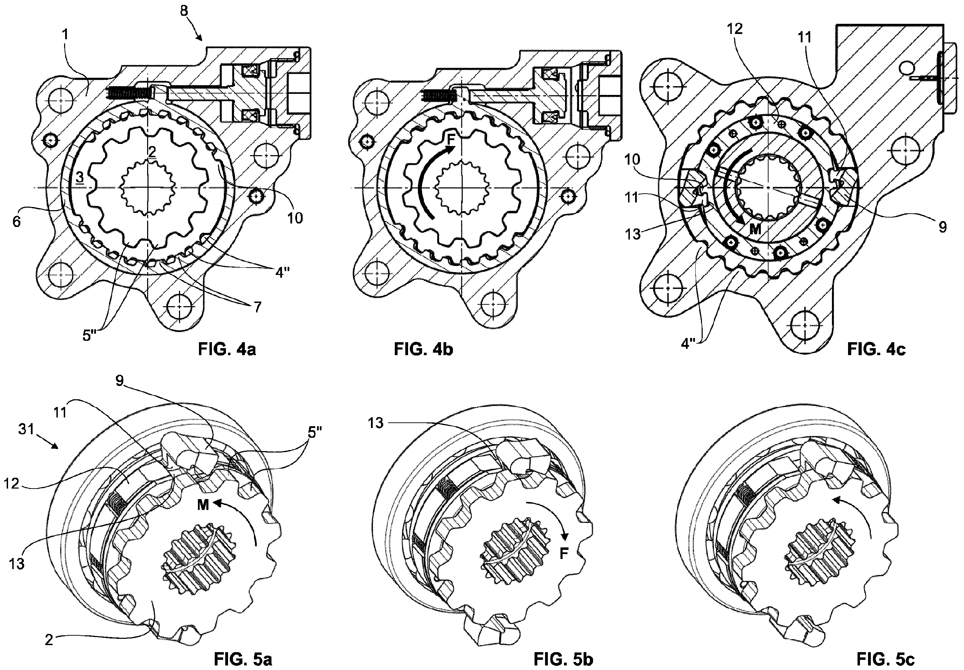

Das Zwischenglied 3 weist als äußere Lastverzahnung eine Schraubverzahnung 4' und als innenseitige Lastverzahnung eine Innenverzahnung 5' auf. Die außenseitige Schraubverzahnung 4' steht mit einer auf der Innenseite des äußeren Kupplungsglieds 1 vorgesehenen, insbesondere auch aus Figur 3b und Figur 4c ersichtlichen inneren Schraubverzahnung 4" über die gesamte Länge der äußeren Schraubverzahnung 4' in Eingriff. Die äußere Schraubverzahnung 4' erstreckt sich in dem durch die Figuren illustrierten Ausführungsbeispiel über die gesamte axiale Breite des Zwischenglieds 3. Andere Ausführungsformen, in denen die Schraubverzahnung kürzer ist und sich nur über einen oder mehrere axiale Teilabschnitte des Zwischengliedes erstreckt, sind ebenfalls denkbar. Die nach innen gerichtete Verzahnung 5' steht in der in Figur 2, Figur 3a und Figur 4a gezeigten Eingriffsstellung mit einer am zweiten Kupplungsglied 2 vorgesehenen Außenverzahnung 5" in Eingriff. Die Innenverzahnung 5' am Zwischenglied 3 bzw. die Außenverzahnung 5" am inneren, zweiten Kupplungsglied 2 erstrecken sich in axialer Richtung gesehen nur über einen kurzen axialen Teilbereich des Zwischenglieds 3 bzw. des inneren Kupplungsgliedes 2 und befinden sich auch nur in der Eingriffsstellung in lastübertragendem Eingriff miteinander.

Die beschriebenen Verzahnungseingriffspaarungen 4'/4" und 5'/5" bilden die Lastverzahnungspaarungen, über die beim bestimmungsgemäßen Einsatz der Freilaufkupplung Drehmoment unter Zwischenschaltung des Zwischengliedes zwischen den Kupplungsglieder 1, 2 übertragen wird. Diese Lastverzahnungspaarungen verteilen sich in der Eingriffsstellung axial über eine Verzahnungsbreite B, die aus Figur 3a ersichtlich ist. Die Verzahnungsbreite B definiert sich über den axialen Abstand von senkrecht zur Rotationsachse stehenden äußeren Verzahnungsebenen, in denen innenseitig und/oder außenseitig des Zwischenglieds wirksame Lastverzahnungspaarungen gerade noch wirksam sind.

Da bei dem in den Figuren gezeigten Ausführungsbeispiel eine am Zwischenglied angeordnete und mit dem ersten Kupplungsglied 1 in Eingriff stehende Lastverzahnung 4' sich über die gesamt Breite des Zwischenglieds 3 erstreckt und die mit dem zweiten Kupplungsglied 2 in Eingriff stehende Lastverzahnung 5' sich axial nicht über die Lastverzahnung 4' hinaus erstreckt, entspricht die Verzahnungsbreite B gleichzeitig der axialen Breite des Zwischenglieds 3.

Das Zwischenglied 3 ist axial verschieblich zwischen dem inneren Kupplungsglied 2 und dem äußeren Kupplungsglied 1 angeordnet, und kann unter Einwirkung der Schraubverzahnungspaarung 4'/4" aus der in Figur 2 und Figur 3a gezeigten Eingriffsstellung axial in die in Figur 3b gezeigte Freilaufstellung verschoben werden. Während in Figur 3a das Zwischenglied 3 und das innere Kupplungsglied 2 über die Verzahnungspaarung 5'/5" in einer Eingriffsstellung zur Lastübertragung in Eingriff stehen und das Zwischenglied 3 mit seiner nach rechts weisenden axialen Außenfläche gegen das Wälzlager 31 abgestützt ist, ist das Zwischenglied 3 in der in Figur 3b gezeigten Stellung nach links verschoben unter außer Eingriff mit dem inneren Kupplungsglied 2.

Hierzu wurde zunächst ein als Sperrglied fungierender Sperrring 6 aus der in Figur 2 und Figur 3a gezeigten Blockierstellung, die auch in Figur 4a dargestellt ist, in die in Figur 3b und Figur 4b gezeigte Freigabestellung relativ zum ersten Kupplungsglied 1 verdreht. In der in Figur 2, Figur 3a und Figur 4a gezeigten Blockierstellung blockiert eine Verzahnung am Sperrring 6, die der innenseitig am äußeren Kupplungsglied 1 vorgesehenen Schraubverzahnung 4" entspricht, als Sperrverzahnung 7 zunächst noch ein axiales Verschieben des Zwischengliedes 3 nach links. Durch ein Verdrehen des Sperrrings 6 relativ zum äußeren Kupplungsglied mittels einer dem Sperrring 6 zugeordneten Sperrglied-Aktuatorik 8 wird der Sperrring in die in Figur 3b und Figur 4b gezeigte Freigabestellung verdreht, in der die Sperrverzahnung 7 mit der innenseitig am äußeren Kupplungsglied 1 vorgesehenen Schraubverzahnung 4" in Überdeckung gerät, so dass das Zwischenglied 3 in die Sperrverzahnung 7 einfahren kann. Sodann geraten Zwischenglied 3 und inneres Kupplungsglied 2 außer Eingriff und das innere, erste Kupplungsglied 2 kann infolge der Entkopplung vom Zwischenglied 3 frei in der in Figur 4b angedeuteten Freilaufdrehrichtung F rotieren.

Das Vorsehen eines Sperrgliedes ist für die Funktion der Kupplung als bloße Freilaufkupplung, die ein freies Drehen in eine Freilaufrichtung und eine Lastübertragung bei einer der Freilaufrichtung entgegengesetzten Drehbeanspruchung zulässt, nicht zwingend erforderlich. Es bietet aber die Möglichkeit, die Kupplung in der Eingriffsstellung zu blockieren und somit bei in Blockierstellung befindlichem Sperrglied auch eine Lastübertragung in Freilaufdrehrichtung zu ermöglichen, indem das Sperrglied verhindert, dass das Zwischenglied die Freilaufstellung einnehmen kann.

In den Figuren 2 bis 5b ist ersichtlich, dass zwei die Steuerelemente bildende Steuerklinken 9, die auch als Synchronisationsklinken fungieren, am Zwischenglied 3 innerhalb der Verzahnungsbreite B und radial innenseitig des Übergriffs, in dem das äußere, erste Kupplungsglied 1 und das innere, zweite Kupplungsglied 2 unter Bildung eines Ringraums überlappend übergreift, angeordnet sind. Die Steuerklinken 9 sind in zwei sich diametral gegenüberliegenden taschenartigen Durchbrüchen in dem Zwischenglied 3 angeordnet (Figur 2 und Figur 4c) und im Zwischenglied 3 frei schwenkbar aufgenommen und stützen sich radial außenseitig mit ihrer dem Zwischenglied abgewandten Seite gegen des erste Kupplungsglied 1 ab. Ein zusätzliches mit den Steuerklinken zusammenwirkendes Lagerungselement ist nicht vorgesehen. Anstelle einer derartigen freien Aufnahme der Steuerelemente in dem Zwischenglied und dessen Abstützung am benachbarten Kupplungsglied, die gewährleistet, dass die Steuerelemente eine hohe Last abstützen können, ist es auch möglich, dass die Steuerklinken 9 auf Lagerstiften, die seitlich der Steuerklinken am Zwischenglied abgestützt sind und in die Steuerklinke eingreifen, schwenkbar gelagert sind.

Die in den Figuren gezeigte Anzahl von zwei Steuerklinken und deren diametral gegenüberliegende und damit den Zwischenring in vorteilhafter Weise in Umfangsrichtung symmetrisch belastende Anordnung hat sich als vorteilhafte Ausgestaltung erwiesen. Es kann aber auch eine hiervon verschiedene Anzahl von Steuerklinken vorgesehen sein (eine oder mehr als zwei) und eine andere Anordnung gewählt werden.

Aus Figur 3a, Figur 3b, Figur 4c, Figur 5a, Figur 5b und Figur 5c ist ersichtlich, dass die Steuerklinken 9 über einen axial zu den Steuerklinken 9 versetzten Steuerausleger 11 mit einem als Reibring 12 ausgebildeten Steuerglied in Eingriff stehen. Der Reibring 12 steht mit dem inneren Kupplungsglied 2 sowie mit dem Innenring des Lagers 31 in Reibkontakt, wird bei einer Relativ-Drehung von innerem Kupplungsglied 2 und Zwischenring 3 aber dadurch, dass der Steuerausleger 11 einerseits mit dem Zwischenglied 3 und andererseits mit dem Reibring 12 formschlüssig zusammenwirkt, daran gehindert, sich mit dem inneren Kupplungsglied 2 und dem sich hiermit mitdrehenden Innenring des Lagers 30 mitzudrehen. Vielmehr wird der Reibring 12 mit den daran ausgebildeten Vorsprüngen, die durch Ausnehmungen 13 im Reibring 12 gebildet sind, gegen die Steuerausleger 11 gedrängt, die hierdurch eine in Umfangsrichtung des Reibrings 12 wirkende Stellkraft erfahren, durch die wiederum ein Stellmoment auf die Steuerklinken 9 ausgeübt wird. Je nach Relativ-Drehrichtung zwischen innerem Kupplungsglied 2 und Zwischenglied 3 werden die Steuerklinken 9 somit entweder in eine Öffnungsstellung gedrängt, in der die freien Enden der Steuerklinken 9 in radialer Richtung von dem ersten Kupplungsglied 2 weggeschwenkt sind und sich außerhalb der Reichweite der am inneren Kupplungsglied 2 vorgesehenen Außenverzahnung 5" befinden. Oder die Steuerklinken 9 werden in eine Einrückstellung gedrängt, in der die freien Enden der Steuerklinken 9 radial nach innen in Richtung des ersten Kupplungsglieds 2 gedrängt werden und hierdurch in Anlage mit der Außenverzahnung 5" geraten. Bei einer Relativ-Drehung des inneren Kupplungsgliedes 2 gegenüber dem Zwischenring 3 in Freilaufdrehrichtung F (Figur 4b, Figur 5b) werden die Steuerklinken 9 somit dauerhaft nach außen außer Eingriff mit der am inneren Kupplungsglied 2 vorgesehenen Verzahnung 5" in die Öffnungsstellung gedrängt. Bei einer Relativ-Drehung des inneren Kupplungsgliedes 2 gegenüber dem Zwischenring 3 in der der Freilaufdrehrichtung entgegengesetzten Lastdrehrichtung M (Figur 4c und Figur 5a) werden die Steuerklinken 9 nach innen in die am inneren Kupplungsglied 2 vorgesehene Verzahnung 5" hineingeschwenkt und nehmen eine Einrückstellung ein.

Die am Reibring 12 ausgebildeten Vorsprünge, die in dem gezeigten Ausführungsbeispiel von den in Umfangsrichtung weisenden Kanten der Ausnehmungen 13 gebildet sind, haben eine wirksame Breite, die eine axiale Verschiebung der hiergegen anliegenden Steuerklinke oder Steuerausleger ermöglicht, die sich in axialer Richtung mit dem Zwischenglied 3 mitbewegen.

Das vorstehend beschriebene Zusammenwirken der Steuerklinken mit einem die Steuerklinken abhängig von der Relativ-Drehrichtung zwischen Zwischenglied und einem Kupplungsglied betätigenden Steuerglied hat zum einen den Vorteil, dass die Steuerklinken sich anders als bei dauerhaft über ein Federelement gegen Steueranschläge angestellte Steuerklinken geräuschlos verhalten. Zudem wird die an einem Kupplungselement als Lastverzahnung verwendete Verzahnung gleichzeitig auch als Steueranschlag verwendet, was eine deutliche konstruktive Vereinfachung darstellt, da hierdurch die ansonsten zusätzlich zu einer Lastverzahnung vorzusehende und Steueranschläge ausbildende Steuerverzahnung entbehrlich sind.

Nachfolgend werden die Vorgänge bei einem Wechsel der Belastungsrichtung beschrieben.

Befindet sich die Freilaufkupplung in der in Figur 3a gezeigten Eingriffsstellung und ist das innere Kupplungsglied 2 in der Lastdrehrichtung M kraftbeaufschlagt, wird das Drehmoment vom inneren Kupplungsglied 2 auf den Zwischenring übertragen. Dieser steht mit dem äußeren Kupplungsglied 1 über die Schraubzerzahnungspaarung 4'/4" in Eingriff und wird durch die Neigung der Schraubverzahnung in Figur 3a nach rechts gegen den Innenring des Lagers 31 gedrängt und über diesen an der Baugruppe abgestützt, mit der das äußere Kupplungsglied 1, das vom Kupplungsgehäuse gebildet ist, fest verbunden ist. In Belastungsrichtung M ist das innere Kupplungsglied 2 demnach über das Zwischenglied mit dem äußeren Kupplungsglied 1 in drehfester, formschlüssiger Verbindung. Aufgrund der Ausgestaltung des Formschlusses mittels hoch belastbarer Lastverzahnungen hat die Kupplung trotz ihrer Kompaktheit ein sehr hohes Drehmomentübertragungspotential.

Findet nun ein Wechsel der Belastungsrichtung in die in Figur 3b eingezeichnete Freilaufrichtung F statt, so drängt zunächst das Zwischenglied 3 bedingt durch die nun in die Belastungsrichtung F beaufschlagte Schraubverzahnungspaarung 4'/4" nach links. Aufgrund des in Blockierstellung befindlichen Sperrrings 6, dessen Sperrverzahnung 7 die Gänge der Schraubverzahnung 4" blockiert, ist eine Bewegung des Zwischenglieds derart, dass es außer Eingriff mit dem inneren Kupplungsglied gerät, ausgeschlossen. Der Freilauf ist auf diese Weise gesperrt und die Kupplung kann als Festkupplung fungieren und auch Drehmoment in die Freilaufrichtung F übertragen.

Wird bei einer Belastungsrichtung in Freilaufrichtung F bzw. vor einem Wechsel der Belastungsrichtung in die Freilaufrichtung F der Sperrring 6 über die Sperrglied-Aktuatorik 8 verdreht, um die Sperrverzahnung 7 in Überdeckung mit der innenseitigen Schraubverzahnung 4" und damit in die Freigabestellung zu bringen, kann das durch die Schraubverzahnungspaarung 4'/4" nach links drängende Zwischenglied 3 in den Sperrring 6 einfahren, bis die Verzahnungspaarung 5'/5" zwischen Zwischenglied 3 und innerem Kupplungsglied 2 außer Eingriff gerät. Nun kann das innere Kupplungsglied 2 in Freilaufrichtung frei drehen. Der in Figur 3b gezeigte Zustand ist erreicht.

In diesem Zustand drängt die innere Kupplung 2 den Reibring 12 reibkraftbedingt ebenfalls in die Freilaufrichtung F. Der Reibring 12 wird aber durch den in die am Reibring 12 vorgesehene Ausnehmung 13 eintauchenden Steuerausleger 11 daran gehindert, sich mit dem inneren Kupplungsglied 2 mitzudrehen und übt dabei über den von einer Steuerkante 10 der Ausnehmung 13 gebildeten Mitnahmevorsprung, der mit den Steuerauslegern 11 in Kontakt steht, eine Stellkraft auf die Steuerausleger 11 und damit ein reibkraftinitiiertes Stellmoment auf die Steuerklinke 9 aus und drängt diese auf diese Weise kontinuierlich in die Öffnungsstellung (Figur 4b, Figur 5b).

Bei einem erneuten Wechsel der Belastungsrichtung aus der Freilaufrichtung F in die entgegengesetzte Belastungsrichtung (Lastdrehrichtung M) dreht sich das innere Kupplungsglied 2 zunächst um einen geringen Winkelbetrag in die Drehrichtung M, wodurch es zwischen Reibring 12 und Steuerausleger 11 zu einem Wechsel der Wirkrichtung der Stellkraft kommt. Die nun über eine Steuerkante 10 des Reibrings 12 auf den Steuerausleger 11 ausgeübte Stellkraft bewirkt zumindest kurzzeitig ein auf die Steuerklinken 9 wirkendes reibkraftinitiiertes Stellmoment, infolge dessen die freien Enden der Steuerklinken 9 nach innen in eine Einrückstellung schwenken und mit der äußeren Lastverzahnung 5" am inneren Kupplungsglied 2 in Anlage geraten (Figur 4c, Lastverzahnung 5" außerhalb der Zeichenebene oder Figur 5c, bei der der Zwischenring sich noch nicht in Eingriffsstellung befindet). Über die Steuerklinken 9 wird nun ein vom inneren Kupplungsglied ausgehendes Moment auf das Zwischenglied 3 ausgeübt, infolge dessen das Zwischenglied 3 unter Wirkung der Schraubverzahnungspaarung 4'/4" wieder nach rechts in die Eingriffsstellung gedrängt wird, bis es wieder die in Figur 3a gezeigte und in Figur 5a aus der Position der Steuerklinken ableitbare Eingriffsstellung eingenommen hat, in der ein zu übertragendes Drehmoment über die hoch beanspruchbaren Verzahnungspaarungen 4'/4" und 5'/5" übertragen werden. Die Steuerklinken 9 sind in der Eingriffsstellung quasi lastfrei.

Um das Einfahren in die Eingriffsstellung zu ermöglichen, sind die die geometrischen Abmessungen und die Positionierung der Steuerklinken 9 am Zwischenglied so auf die Verzahnungspaarung 5', 5"abgestimmt bzw. mit dieser synchronisiert, dass dann, wenn die Steuerklinken 9 mit der Verzahnung 5" am Kupplungsglied 2 in Anlage kommen, die am Zwischenglied vorgesehene Verzahnung 5' in die am Kupplungsglied 2 vorgesehene Verzahnung 5" seitlich einfahren kann (Zahn in Zahnlücke). Die Steuerklinken 9 und die Lastverzahnung 5" haben somit auch eine Synchronisierungsfunktion.

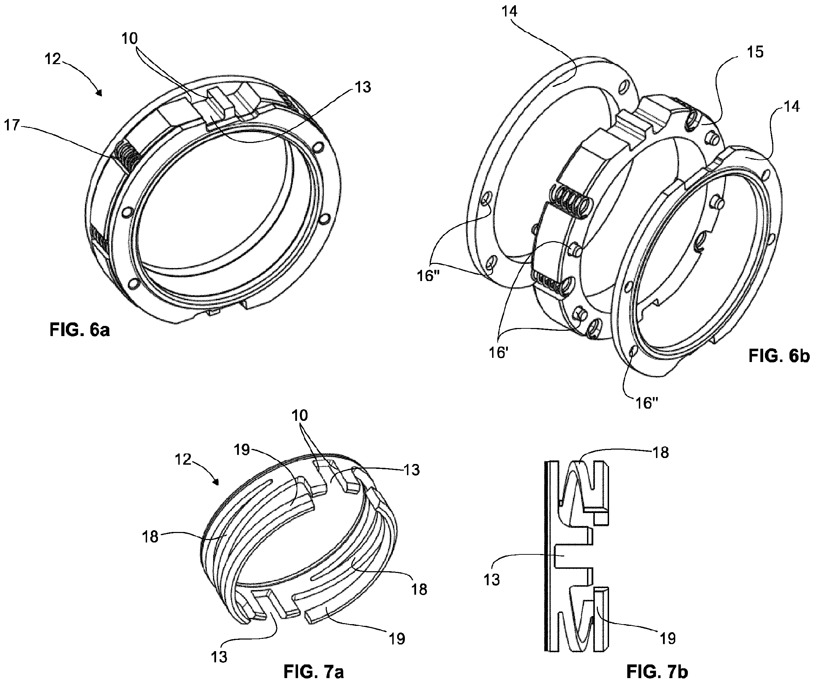

Das als Reibring 12 ausgebildete Steuerteil ist zu Veranschaulichungszwecken im Detail in Figur 6a und Figur 6b in einer entspannten Stellung gezeigt.

Der Reibring 12 weist eine der Anzahl der Steuerklinken oder Steuerausleger entsprechende Anzahl und eine deren Positionierung am Zwischenglied entsprechend positionierte Ausnehmungen 13 auf, in die die mit den Steuerklinken 9 zusammenwirkenden Steuerausleger 11 eingreifen können und durch die Steuerkanten 10 ausgebildet sind, die mit dem Steuerausleger 11 in Anlage kommen, um die vom Reibring ausgeübten Stellkräfte auf den Steuerausleger 11 übertragen zu können. Selbstverständlich können auch andersartige Vorsprünge oder sonstige Mittel, die ein In-Anlage-Kommen des Reibrings 12 gegen die Steuerausleger 11 oder direkt gegen eine Steuerklinke 9 ermöglichen, vorgesehen werden.

Am mehrteilig ausgebildeten Reibring 12 sind in axialer Richtung wirkende und sich über zumindest einen Teilabschnitt des Umfangs erstreckende Reibglieder 14 vorgesehen, die einem Trägerring 15 zugeordnet sind. Reibglieder 14 und Trägerring 15 sind greifen dabei über miteinander korrespondierende Arretierungsmittel 16' und 16" derart ineinander, dass die Reibglieder zumindest in geringem Maße gegenüber dem Trägerring 15 axial verschieblich, gleichwohl aber gegenüber dem Trägerring 15 verdrehsicher gehalten sind. Im Trägerring 15 sind Aufnahmen für Vorspannelemente 17, bevorzugt in Form der in den Figuren gezeigten Spiralfedern, vorgesehen, über die die Reibglieder 14 in axialer Richtung vom Trägerring 15 weggedrängt werden.

Wird der Reibring 12 bei Einfügen in einen durch zwei Begrenzungsflächen seitlich begrenzten Ringspalt in axialer Richtung gestaucht, üben die Vorspannelemente 17 eine Stellkraft aus, durch die die Reibglieder 14 mit ihren seitlichen Außenflächen gegen die den Ringspalt seitlich begrenzenden Begrenzungsflächen angestellt werden.

Eine alternative Ausgestaltung eines Reibrings 12 zeigen Figur 7a und Figur 7b. Am Reibring 12 sind in axialer Richtung wirkende und sich über zumindest einen Teilabschnitt des Umfangs erstreckende Biegestege 18 vorgesehen, die die Vorspannelemente bilden und als Biegefedern wirksam sind und eine in axiale Richtung wirkende Stellkraft auf Seitenarme 19 ausüben, die sich über einen Teilabschnitt des Umfangs des Reibrings in Umfangsrichtung erstrecken. Wird der Reibring 12 bei Einfügen in einen durch zwei Begrenzungsflächen seitlich begrenzten Ringspalt in axialer Richtung gestaucht, üben die Biegestege als Vorspannelemente eine Rückstellkraft aus, durch die der Reibring 12 mit seinen seitlichen von den Seitenarmen 19 gebildeten Außenflächen gegen die den Ringspalt seitlich begrenzenden Begrenzungsflächen angestellt wird. Auch diese Ausgestaltung bildet Steuerkanten 10 bildende Ausnehmungen 13 aus.

Bei den beiden vorstehend beschriebenen beispielhaften Ausgestaltungen eines Reibrings ist gewährleistet, dass der Reibring spielfrei in dem Ringspalt aufgenommen ist. Außerdem lässt sich das Reibmoment, dass der Reibring erfährt, wenn er bei rotierendem Ringspalt stationär in diesem gehalten wird, über die Ausgestaltung Vorspannelemente, in den gezeigten Ausführungsbeispielen also über die Federn oder der Biegestege und Seitenarme, gut einstellen. In dem in den Figuren gezeigten Ausführungsbeispielen wird der Ringspalt zwischen dem Innenring des Lagers 31 und der diesem zugewandten seitlichen Flächen der am Kupplungsglied 2 vorgesehenen Lastverzahnung 5" gebildet.

Es sei darauf hingewiesen, dass die Anordnungen bzw. die Zuordnungen der einzelnen Funktionselemente der Freilaufkupplung, insbesondere die Anordnung bzw. Zuordnung der Schraubverzahnung, der Steuerklinke, des Steuerteils, der Steuer-Anschläge und des Sperrgliedes mit seinen Sperrelementen an dem ersten Kupplungsglied, dem zweiten Kupplungsglied oder dem Zwischenring, sowie die Fragen, welches der beiden Kupplungsglieder im Überlappungsbereich innen- oder außenliegend zu dem jeweils anderen Kupplungsglied angeordnet ist, ob das äußere oder innere Kupplungsglied drehangetrieben ist oder lediglich eine Stützfunktion ausübt und welche der Verzahnungstypen radial außenseitig oder radial innenseitig an den Funktionsteilen vorgesehen sind, für die Beibehaltung der Grundfunktion der beschriebenen Freilaufkupplung und für die im Sinne der Erfindung als vorteilhaft beschriebenen konstruktiven Ausgestaltung nicht zwingend vorgegeben sind und nicht notwendigerweise so, wie in den Figuren gezeigt, vorgesehen sein müssen. Durch Änderung der Anordnung bzw. Zuordnung der einzelnen funktionalen Elemente gegenüber der in den Figuren gezeigten Ausgestaltung wird der Gegenstand der Erfindung nicht verlassen.

Es sei nochmals darauf hingewiesen, dass die Freilaufkupplung, so wie in den Figuren gezeigt, als Rücklaufsperre konzipiert sein kann. Die Freilaufkupplung kann aber auch als Überholkupplung konzipiert sein, bei der ein Kupplungsteil das andere einer Lastübertragungsrichtung drehend antreibt und in einer Freilaufrichtung zu überholen vermag.

### Bezugszeichenliste

- 1: erstes Kupplungsglied
- 2: zweites Kupplungsglied
- 3: Zwischenglied
- 4': äußere Schraubverzahnung am Zwischenglied
- 4": innere Schraubverzahnung am ersten Kupplungsglied
- 5': Innenverzahnung am Zwischenglied
- 5": Außenverzahnung am zweiten Kupplungsglied
- 6: Sperrglied (Sperrring)
- 7: Sperrverzahnung
- 8: Sperrglied-Aktuatorik
- 9: Steuerelement (Steuer- und Synchronisationsklinke)
- 10: Steuerkante
- 11: Steuerausleger
- 12: Steuerteil (Reibring)
- 13: Ausnehmungen im Reibring
- 14: Reibglieder
- 15: Trägerring
- 16', 16": Arretierungsmittel
- 17: Vorspannelemente
- 18: Biegesteg
- 19: Seitenarme
- 30: äußerer Verschlussdeckel
- 31: Wälzlager

## Patentansprüche

1. Freilaufkupplung mit einem ersten Kupplungsglied (1), einem zweiten Kupplungsglied (2) und einem mit erstem Kupplungsglied (1) und zweitem Kupplungsglied (2) zusammenwirkenden Zwischenglied (3), das abhängig von der Richtung der Drehbeanspruchung der Freilaufkupplung eine Freilaufstellung oder eine Eingriffsstellung einzunehmen vermag, wobei ein Wechsel zwischen der Freilaufstellung und der Eingriffsstellung durch eine axiale Verschiebung des Zwischenglieds (3) erfolgt, und wobei wenigstens ein Steuermechanismus vorgesehen ist, der die axiale Verschiebung des Zwischenglieds (3) aus der Freilaufstellung in die Eingriffsstellung mittels eines Steuerelements (9) initiiert, **dadurch gekennzeichnet, dass** das erste Kupplungsglied (1) das zweite Kupplungsglied (2) in der Eingriffsstellung unter Bildung einer wirksamen Verzahnungsbreite (B) axial übergreift und das Steuerelement (9) zumindest teilweise innerhalb der Verzahnungsbreite (B) am Zwischenglied (3) angeordnet ist.

2. Freilaufkupplung nach Anspruch 1 oder nach dem Oberbegriff des Anspruchs 1, **dadurch gekennzeichnet, dass** das Steuerelement (9) am Zwischenglied angeordnet ist und in der Freilaufstellung mit einer am ersten Kupplungsglied (1) oder am zweiten Kupplungsglied (2) vorgesehenen Lastverzahnung in Anlage kommt, um die axiale Verschiebung des Zwischenglieds in die Eingriffsstellung (3) zu initiieren, wenn die Drehbeanspruchung von der Freilaufdrehrichtung in die Lastdrehrichtung wechselt.

3. Freilaufkupplung nach Anspruch 1 oder Anspruch 2, **dadurch gekennzeichnet, dass** ein am ersten Kupplungsglied (1) oder am zweiten Kupplungsglied (2) angeordnetes Steuerteil (12), das mit dem Steuerelement (9) zusammenwirkt, um die axiale Verschiebung des Zwischengliedes (3) zu initiieren, radial innenseitig des Übergriffs angeordnet ist.

4. Freilaufkupplung nach einem der vorhergehenden Ansprüche, **dadurch gekennzeichnet, dass** das Zwischenglied (3) ringförmig ausgebildet ist und eine wenigstens teilweise mit einer äußeren Lastverzahnung (4') versehene Außenringfläche und eine wenigstens teilweise mit einer inneren Lastverzahnung (5') versehene Innenringfläche aufweist, wobei die äußere Lastverzahnung (4') die innere Lastverzahnung (5') axial zumindest teilweise übergreift.

5. Freilaufkupplung nach dem der vorhergehenden Anspruch, **dadurch gekennzeichnet, dass** das die Außenringfläche über die volle axiale Breite mit der äußeren Lastverzahnung (4') versehen ist, während die Innenringfläche nur in einem Teilabschnitt mit einer inneren Lastverzahnung (5') versehen ist.

6. Freilaufkupplung nach einem der vorhergehenden Ansprüche, **dadurch gekennzeichnet, dass** das Zwischenglied (3) an einer Innenringfläche oder an einer Außenringfläche eine Schraubverzahnung (5') aufweist, wobei die Schraubverzahnung (5') am Zwischenglied (3) mit einer korrespondierenden Schraubverzahnung (5") an einem der Kupplungsglieder in Eingriff steht.

7. Freilaufkupplung nach einem der vorherigen Ansprüche, **dadurch gekennzeichnet, dass** der Steuermechanismus derart eingerichtet ist, dass er die axiale Verschiebung des Zwischenglieds (3) aus der Freilaufstellung in die Eingriffsstellung nur in definierten, den Übergang des Zwischenglieds (3) in die Eingriffsstellung gewährleistenden Drehwinkelstellungen ermöglicht.

8. Freilaufkupplung nach einem der vorhergehenden Ansprüche, **dadurch gekennzeichnet, dass** der Steuermechanismus ein Steuerteil (12) umfasst, das abhängig von der Richtung einer Relativdrehung zwischen den Kupplungsgliedern (1, 2) das Steuerelement (9) bei in Freilaufdrehrichtung F beanspruchter Freilaufkupplung kontinuierlich in eine Öffnungsstellung drängt, , wobei das Steuerteil (12) in Reibkontakt mit einem Kupplungsglied (2) steht und bei einer Relativdrehung der Kupplungsglieder (1, 2) zueinander reibkraftbeaufschlagt mittelbar oder unmittelbar gegen das Steuerelement (9) angestellt ist.

9. Freilaufkupplung nach Anspruch 8, **dadurch gekennzeichnet, dass** das Steuerteil (12) als ein mit einem Kupplungsglied (2) in Reibkontakt stehender Reibring ausgebildet ist.

10. Freilaufkupplung nach einem der vorhergehenden Ansprüche, **dadurch gekennzeichnet, dass** in das Zwischenglied (3) zur Aufnahme des Steuerelements (9) eine oder mehrere radiale taschenartige Vertiefungen oder Durchbrüche als Steuerelementaufnahme(n) eingebracht sind.

11. Freilaufkupplung nach einem der vorhergehenden Ansprüche, **dadurch gekennzeichnet, dass** ein Sperrglied (6) vorgesehen ist, das die axiale Verschiebung des Zwischengliedes (3) aus der Eingriffsstellung in die Freilaufstellung blockiert, wenn sich das Sperrglied (6) in einer Blockierstellung befindet, und die axiale Verschiebung des Zwischengliedes (3) aus der Eingriffsstellung in die Freilaufstellung freigibt, wenn es sich in einer Freigabestellung befindet.

12. Freilaufkupplung nach dem vorhergehenden Anspruch, **dadurch gekennzeichnet, dass** das Sperrglied (6) eine einer Schraubverzahnung (4") eines Kupplungsglieds (1) entsprechende Sperrverzahnung (7) oder eine der Lastverzahnung (5") eines Kupplungsglieds (2) entsprechende Sperrverzahnung (7) aufweist, die mit der an dem jeweiligen Kupplungsglied vorgesehenen Schraubverzahnung (4") oder Lastverzahnung (5"), der die Sperrverzahnung (7) entspricht, bei in Freigabestellung befindlichem Sperrglied (6) in Überdeckung steht, so dass das Zwischenglied (3) zur Einnahme der Freilaufstellung axial in das Sperrglied (6) einfahren kann.

13. Freilaufkupplung nach einem der drei vorhergehenden Ansprüche, **dadurch gekennzeichnet, dass** das Sperrglied (6) als extern schaltbares Sperrglied ausgebildet ist, das durch eine externe Aktuierung aus der Blockierstellung in die Freigabestellung und/oder aus der Freigabebestellung in die Blockierstellung überführt wird, wobei das Sperrglied (6) monostabil ausgebildet ist und entweder die Blockierstellung oder die Freigabestellung eine Grundstellung bildet, die das Sperrglied (6) selbsttätig einnimmt, wenn es durch die Aktuatorik nicht kraftbeaufschlagt ist.

14. Elektromotorisch angetriebene Achsantriebseinheit eines Kraftfahrzeugs mit einem 2-Gang-Planetengetriebe, über das verschiedene Übersetzungsstufen zwischen einem elektromotorischen Antriebsmotor und den von der Achsantriebseinheit angetriebenen Antriebsrädern realisiert sind, wobei durch Verwendung einer Freilaufkupplung nach einem der vorherigen Ansprüche bei der Achsantriebseinheit die Freilaufkupplung zur Realisierung der Übersetzungsstufe des 2-Gang-Platentengetriebes durch Blockierung oder Freigeben der Rotation einer Sonne und/oder eines Planetensatzes und/oder eines Hohlrades eingesetzt ist.

15. Elektromotorisch angetriebene Achsantriebseinheit nach dem vorhergehenden Anspruch, **dadurch gekennzeichnet, dass** die Freilaufkupplung eine mittels eines Sperrglieds (6) sperrbare und als Rücklaufsperre eingesetzte Freilaufkupplung ist und über die Freilaufkupplung mittels des Sperrglieds ein Rückwärtsgang und/oder der Rekuperationsbetrieb ermöglicht ist.

## Claims

1. Overrunning clutch having a first clutch member (1), a second clutch member (2) and an intermediate member (3) which interacts with the first clutch member (1) and second clutch member (2) and which, depending on the direction of the rotational loading of the overrunning clutch, can assume an overrunning position or an engagement position, wherein a change between the overrunning position and the engagement position occurs by an axial displacement of the intermediate member (3), and wherein at least one control mechanism is provided which initiates the axial displacement of the intermediate member (3) from the overrunning position into the engagement position by means of a control element (9), **characterized in that** the first clutch member (1) axially overlaps the second clutch member (2) in the engagement position with formation of an effective toothing width (B), and the control element (9) is arranged on the intermediate member (3) at least partially within the toothing width (B).

2. Overrunning clutch as claimed in claim 1 or as claimed in the preamble of claim 1, **characterized in that** the control element (9) is arranged on the intermediate member and, in the overrunning position, comes into contact with a load toothing provided on the first clutch member (1) or on the second clutch member (2) in order to initiate the axial displacement of the intermediate member into the engagement position (3) when the rotational loading changes from the overrunning rotation direction into the load rotation direction.

3. Overrunning clutch as claimed in claim 1 or claim 2, **characterized in that** a control part (12) which is arranged on the first clutch member (1) or on the second clutch member (2) and which interacts with the control element (9) in order to initiate the axial displacement of the intermediate member (3) is arranged radially on the inner side of the overlap.

4. Overrunning clutch as claimed in one of the preceding claims, **characterized in that** the intermediate member (3) is of annular design and has an outer annular surface provided at least partially with an outer load toothing (4') and has an inner annular surface provided at least partially with an inner load toothing (5'), wherein the outer load toothing (4') at least partially axially overlaps the inner load toothing (5').

5. Overrunning clutch as claimed in the preceding claim, **characterized in that** the outer annular surface is provided over the full axial width with the outer load toothing (4'), whereas the inner annular surface is provided only in a subportion with an inner load toothing (5').

6. Overrunning clutch as claimed in one of the preceding claims, **characterized in that** the intermediate member (3) has a helical toothing (5') on an inner annular surface or on an outer annular surface, wherein the helical toothing (5') on the intermediate member (3) is in engagement with a corresponding helical toothing (5") on one of the clutch members.

7. Overrunning clutch as claimed in one of the preceding claims, **characterized in that** the control mechanism is designed in such a way that it allows the axial displacement of the intermediate member (3) from the overrunning position into the engagement position only in defined angle-of-rotation positions ensuring the transfer of the intermediate member (3) into the engagement position.

8. Overrunning clutch as claimed in one of the preceding claims, **characterized in that** the control mechanism comprises a control part (12) which, depending on the direction of a relative rotation between the clutch members (1, 2), with the overrunning clutch loaded in the overrunning rotation direction F, continuously forces the control element (9) into the open position, wherein the control part (12) is in frictional contact with a clutch member (2) and, during a relative rotation of the clutch members (1, 2) with respect to one another, is positioned under frictional force loading directly or indirectly against the control element (9).

9. Overrunning clutch as claimed in claim 8, **characterized in that** the control part (12) is designed as a friction ring which is in frictional contact with a clutch member (2).

10. Overrunning clutch as claimed in one of the preceding claims, **characterized in that** one or more radial pocket-like depressions or apertures as control element receptacle(s) are incorporated in the intermediate member (3) for receiving the control element (9).

11. Overrunning clutch as claimed in one of the preceding claims, **characterized in that** a blocking member (6) is provided which blocks the axial displacement of the intermediate member (3) from the engagement position into the overrunning position when the blocking member (6) is situated in a blocking position, and releases the axial displacement of the intermediate member (3) from the engagement position into the overrunning position when it is situated in a release position.

12. Overrunning clutch as claimed in the preceding claim, **characterized in that** the blocking member (6) has a blocking toothing (7) which corresponds to a helical toothing (4") of a clutch member (1) or a blocking toothing (7) which corresponds to the load toothing (5") of a clutch member (2) and which, with the blocking member (6) situated in the release position, overlaps with the helical toothing (4") or load toothing (5") which is provided on the respective clutch member and which corresponds to the blocking toothing (7), with the result that the intermediate member (3) can move axially into the blocking member (6) to assume the overrunning position.

13. Overrunning clutch as claimed in one of the three preceding claims, **characterized in that** the blocking member (6) is designed as an externally switchable blocking member which is transferred by an external actuation from the blocking position into the release position and/or from the release position into the blocking position, wherein the blocking member (6) is of monostable design and either the blocking position or the release position forms a base position which the blocking member (6) automatically assumes when it is not forceloaded by the actuator.

14. Electric motor driven axle drive unit having a 2-speed planetary gear mechanism via which various transmission stages are realized between an electromotive drive motor and the drive wheels driven by the axle drive unit, wherein by the use of an overrunning clutch as claimed in one of the preceding claims in the axle drive unit the overrunning clutch is used to realize the transmission stage of the 2-speed planetary gear mechanism by blocking or releasing the rotation of a sun wheel and/or a planet set and/or an annulus.

15. Electric motor driven axle drive unit as claimed in the preceding claim, **characterized in** the overrunning clutch is an overrunning clutch which can be blocked by means of a blocking member (6) and which is used as a backstop, and a reverse gear and/or recuperation operation is made possible via the overrunning clutch by means of the blocking member.

## Revendications

1. Embrayage à roue libre comportant un premier élément d'embrayage (1), un second élément d'embrayage (2) et un élément intermédiaire (3) qui interagit avec le premier élément d'embrayage (1) et le second élément d'embrayage (2) et qui est capable de prendre une position de roue libre ou une position embrayée en fonction de la direction de la contrainte de rotation de l'embrayage à roue libre, un changement entre la position de roue libre et la position embrayée étant effectué par un déplacement axial de l'élément intermédiaire (3), et il est prévu au moins un mécanisme de commande qui, au moyen d'un élément de commande (9), déclenche le déplacement axial de l'organe intermédiaire (3) de la position de roue libre à la position embrayée, **caractérisé en ce que** le premier élément d'embrayage (1) s'engage axialement sur le deuxième élément d'embrayage (2) dans la position d'enclenchement en formant une largeur de denture effective (B), et l'élément de commande (9) est disposé au moins partiellement à l'intérieur de la largeur de denture (B) sur l'élément intermédiaire (3).

2. Embrayage à roue libre selon la revendication 1 ou selon le terme générique de la revendication 1, **caractérisé en ce que** l'élément de commande (9) est disposé sur l'élément intermédiaire et, en position de roue libre, vient en contact avec une denture de charge prévue sur le premier élément d'embrayage (1) ou sur le deuxième élément d'embrayage (2) afin d'initier le déplacement axial de l' élément intermédiaire dans la position embrayée (3) lorsque la contrainte de rotation passe du sens de rotation de roue libre au sens de rotation de charge.

3. Embrayage à roue libre selon la revendication 1 ou la revendication 2, **caractérisé en ce qu'un** organe de commande (12) disposé sur le premier élément d'embrayage (1) ou sur le second élément d'embrayage (2) et coopérant avec l'élément de commande (9) pour initier le déplacement axial de l'élément intermédiaire (3) est disposé radialement à l'intérieur du chevauchement.

4. Embrayage à roue libre selon l'une des revendications précédentes, **caractérisé en ce que** l'élément intermédiaire (3) est annulaire et présente une surface annulaire extérieure pourvue au moins partiellement d'une denture de charge extérieure (4') et une surface annulaire intérieure pourvue au moins partiellement d'une denture de charge intérieure (5'), la denture de charge extérieure (4') recouvrant au moins partiellement la denture de charge intérieure (5') axialement.

5. Embrayage à roue libre selon la revendication précédente, **caractérisé en ce que** la surface annulaire extérieure est pourvue de la denture de charge extérieure (4') sur toute la largeur axiale, tandis que la surface annulaire intérieure n'est pourvue d'une denture de charge intérieure (5') que dans une section partielle.

6. Embrayage à crabots selon l'une quelconque des revendications précédentes, **caractérisé en ce que** l'élément intermédiaire (3) comporte des dentures de vis (5') sur une surface annulaire intérieure ou sur une surface annulaire extérieure, les dentures de vis (5') sur l'élément intermédiaire (3) s'engageant avec des dentures de vis correspondantes (5") sur l'un des éléments d'embrayage.

7. Embrayage à roue libre selon l'une des revendications précédentes, **caractérisé en ce que** le mécanisme de commande est agencé de telle sorte qu'il n'autorise le déplacement axial de l'organe intermédiaire (3) de la position de roue libre à la position embrayée que dans des positions angulaires définies assurant le passage de l'élément intermédiaire (3) en position embrayée.

8. Embrayage à roue libre selon l'une des revendications précédentes, **caractérisé en ce que** le mécanisme de commande comprend un organe de commande (12) qui, en fonction du sens d'une rotation relative entre les éléments d'embrayage (1, 2), sollicite en permanence l'élément de commande (9) dans une position ouverte lorsque l'embrayage à roue libre est sollicité dans le sens de rotation de la roue libre F, dans lequel l'organe de commande (12) est en contact de friction avec un élément d'embrayage (2) et, lorsque les éléments d'embrayage (1, 2) tournent l'un par rapport à l'autre, est appliquée avec une force de friction directement ou indirectement contre l'élément de commande (9).

9. Embrayage à roue libre selon la revendication 8, **caractérisé en ce que** l'organe de commande (12) est conçue comme un anneau de friction en contact de friction avec un élément d'embrayage (2).

10. Embrayage à roue libre selon l'une des revendications précédentes, **caractérisé en ce qu'un** ou plusieurs évidements ou ouvertures radiaux en forme de poche sont réalisés dans l'élément intermédiaire (3) pour recevoir l'élément de commande (9).

11. Embrayage à roue libre selon l'une quelconque des revendications précédentes, **caractérisé en ce qu'il** est prévu un élément de blocage (6) qui bloque le déplacement axial de l'élément intermédiaire (3) de la position embrayée à la position de roue libre lorsque l'élément de blocage (6) est dans une position de blocage, et libère le déplacement axial de l'élément intermédiaire (3) de la position embrayée à la position de roue libre lorsqu'il est dans une position de libération.

12. Embrayage à roue libre selon la revendication précédente, **caractérisé en ce que** l'élément de blocage (6) présente une denture de blocage (7) correspondant à une denture de vis (4") d'un élément d'embrayage (1) ou une denture de blocage (7) correspondant à la denture de charge (5") d'un élément d'embrayage (2), qui chevauche la denture de vis (4") ou la denture de charge (5") prévue sur l'élément d'embrayage respectif, à laquelle correspond la denture de blocage (7), lorsque l'élément de blocage (6) est dans la position de libération, de sorte que l'élément intermédiaire (3) peut se déplacer axialement dans l'élément de blocage (6) afin de prendre la position de roue libre.

13. Embrayage à roue libre selon l'une des trois revendications précédentes, **caractérisé en ce que** l'élément de blocage (6) est conçu comme un élément de blocage commutable de l'extérieur, qui passe, par un actionnement externe, de la position de blocage à la position de libération et/ou de la position de libération à la position de blocage, l'élément de blocage (6) étant monostable et la position de blocage ou la position de libération formant une position de base que l'élément de blocage (6) prend automatiquement lorsqu'il n'est pas sollicité par le système d'actionnement.

14. Unité d'entraînement d'essieu entraînée par un moteur électrique d'un véhicule automobile avec une boîte de vitesses planétaire à 2 vitesses, par l'intermédiaire de laquelle différents étages de transmission sont réalisés entre un entraînement par moteur électrique et les roues motrices entraînées par l'unité d'entraînement d'essieu, dans laquelle, en utilisant un embrayage à roue libre selon l'une des revendications précédentes dans l'unité d'entraînement d'essieu, l'embrayage à roue libre est utilisé pour réaliser l'étage de transmission de la boîte de vitesses planétaire à 2 vitesses en bloquant ou en libérant la rotation d'un soleil et/ou d'un train planétaire et/ou d'une couronne dentée.

15. Unité d'entraînement d'essieu entraînée par un moteur électrique selon la revendication précédente, **caractérisée en ce que** l'embrayage à roue libre est un embrayage à roue libre qui peut être bloqué au moyen d'un élément de blocage (6) et qui est utilisé comme antidévireur, et une opération de marche arrière et/ou de récupération est rendue possible par l'embrayage à roue libre au moyen de l'élément de blocage.
